# EUROPEAN PATENT SPECIFICATION

(11) **EP 3 252 206 B1**
(45) Date of publication and mention of the grant of the patent: **20.11.2019**
(21) Application number: 15879603.7
(22) Date of filing: 03.07.2015
(51) Int. Cl.: D06F 39/08

(54) **TWO-HEAD DRAINAGE PUMP OF WASHING MACHINE**
ZWEIKÖPFIGE ENTWÄSSERUNGSPUMPE EINER WASCHMASCHINE
POMPE DE DRAINAGE À DEUX TÊTES D'UNE MACHINE À LAVER

(30) Priority: 27.01.2015 CN 201510041115
(43) Date of publication of application: 06.12.2017
(73) Proprietor: Qingdao Haier Washing Machine Co., Ltd., Shandong 266101 (CN)
(72) Inventor: PENG, Xiuwen, Qingdao Shandong 266101 (CN); XU, Sheng, Qingdao Shandong 266101 (CN); HU, Haitao, Qingdao Shandong 266101 (CN); LI, Yimin, Qingdao Shandong 266101 (CN)
(74) Representative: Beck & Rössig European Patent Attorneys
(86) International application number: PCT/CN2015/083311
(87) International publication number: WO 2016/119401

(56) References cited:
- EP-A2- 0 736 626
- WO-A2-2011/147009
- CN-A- 102 587 091
- CN-A- 103 031 699
- CN-A- 103 757 862
- JP-A- 2011 041 741

## Description

The present disclosure relates to the technical field of washing machines, in particular to a double-head drainage pump of a washing machine as defined by the preamble portion of claim 1.

All drum washing machines use drainage pumps as active drainage equipment so as to be suitable for more complex using environments and supply better use feelings for users. A drainage pump of a traditional drum washing machine mainly runs in stages of drainage after washing, drainage after rising and dewatering in an integral washing procedure. But, with development of society, the water resource becomes more and more important, and drum washing machines capable of recycling the water resource emerge as the times require.

As the drum washing machine needs to recycle the water resource, the drainage pump not only needs to have a drainage function of the traditional drum washing machine, but also needs to have a function of draining drained water to a water treatment system and enabling the drained water to return to the drum washing machine. For example, a mode that two drainage pumps are mounted can be adopted to realize the functions, wherein one drainage pump controls drained water after washing or dewatering to be drained out of the washing machine, and the other drainage pump controls drained water after washing to be drained to a water reusing system, so that the two drainage pumps need to be mounted at the same time, not only is the mounting complexity increased, but also the manufacturing cost is increased to a certain extent.

Therefore, a drainage pump suitable for the drum washing machine with the water reusing function is needed, and the drainage pump not only is simple in structure but also is convenient to mount.

A double-head drainage pump according to the preamble portion of claim 1 is known from WO 2011/147009 A2.

The present invention aims at an alternative double-head drainage pump for a washing machine, which drainage pump is not only simple in structure but also is convenient to mount.

This technical problem is solved by a washing machine as defined by claim 1. Advantageous embodiments are indicated in further claims.

The present disclosure provides a double-head drainage pump of a washing machine, which can be applied to the drum washing machine with the water reusing function and has the technical characteristics of being simple in structure and convenient to mount. The present disclosure particularly adopts the following technical scheme:
A double-head drainage pump of a washing machine, comprises a pump housing in which a water inlet is formed, at least one first water outlet and at least one second water outlet are formed in the pump housing, a first drainage motor is mounted on the pump housing corresponding to the first water outlet and a second drainage motor is mounted on the pump housing corresponding to the second water outlet, the first drainage motor controls opening/closing of the first water outlet, and the second drainage motor controls opening/closing of the second water outlet.

Further, the pump housing at least comprises a first pump housing and a second pump housing which internally communicate with each other, the water inlet and the first water outlet are formed in the first pump housing, and the second water outlet is formed in the second pump housing; and the first drainage motor is mounted on the first pump housing, and the second drainage motor is mounted on the second pump housing.

Further, the first pump housing and the second pump housing are arranged in parallel, and the second pump housing and the water inlet are arranged on the same side of the first pump housing.

In a preferred embodiment a third water outlet which communicates with the water inlet is also formed in the first pump housing, and the second pump housing is connected with the third water outlet.

In another preferred embodiment the first pump housing comprises a first pump housing body, a water inlet pipe, a first water outlet pipe and a third water outlet pipe, wherein the first pump housing body is internally provided with a hollow channel, the water inlet pipe, the first water outlet pipe and the third water outlet pipe communicate with the hollow channel of the first pump housing body separately. The water inlet, the first water outlet and the third water outlet are correspondingly formed in the end parts of the water inlet pipe, the first water outlet pipe and the third water outlet pipe.

In yet another preferred embodiment the water inlet pipe, the first water outlet pipe and the third water outlet pipe communicate with a side wall of the first pump housing body, the third water outlet pipe and the water inlet pipe are arranged on a same plane, and the third water outlet pipe and the first water outlet pipe are arranged on different planes.

Preferably, the third water outlet pipe and the water inlet pipe are arranged on a same side of the first pump housing body and preferably, the water inlet of the water inlet pipe is formed in the manner of slanting upward by 5-15 degrees.

In yet another preferred embodiment a second pump housing water inlet which communicates with the second water outlet is formed in the second pump housing and is connected with the third water outlet of the first pump housing.

In yet another preferred embodiment the second pump housing water inlet communicates with the third water outlet of the first pump housing through a connector, and preferably, the connector is a soft water pipe.

In yet another preferred embodiment the first pump housing and the second pump housing are arranged in a split mode, and the second pump housing communicates with the first pump housing through the connector, or the first pump housing and the second pump housing are integrally formed.

In yet another preferred embodiment a drainage lift of the second water outlet is smaller than that of the first water outlet.

Preferably, a first check structure for one-way drainage is arranged on the first water outlet and a second check structure for one-way drainage is arranged on the second water outlet, the second check structure is integrally formed by a soft material and comprises a mounting part with annular shape and a check part with disc shape, the mounting part sleeves a pipe wall of the second water outlet, and the check part covers the second water outlet.

In the double-head drainage pump of the washing machine, provided by the present disclosure, the first water outlet and the second water outlet which share one water inlet are formed in the pump housing, the first water outlet is used for realizing drainage of the washing machine, and the second water outlet is used for realizing water reusing drainage. So that the double-head drainage pump of the present disclosure can be suitable for the drum washing machine with a water reusing function and is high in integration level of the whole structure, simple in structure and easy to mount.

The pump housing of the double-head drainage pump disclosed by the present disclosure realizes internal communication but is not integrally designed. In order to reduce the external size, and according to the actual using environment, the size and the drainage lift of one pump are particularly reduced. The double-head drainage pump disclosed by the present disclosure can realize the functions of water reusing and drainage and can replace following complex structures and parts, such as a three-way valve. The check structure is arranged at each of the two water outlets of the double-head drainage pump disclosed by the present disclosure, so that water reflux can be avoided, and secondary pollution is avoided.

Exemplary embodiments of a double-head drainage pump of a washing machine disclosed by the present disclosure is described in detail below with reference to the accompanying drawings. In the drawings:
Fig. 1 is a stereoscopic structure mounting front view of a double-head drainage pump of the present disclosure;
Fig. 2 is a stereoscopic structure mounting rear view of the double-head drainage pump of the present disclosure;
Fig. 3 is a whole structure mounting rear view of the double-head drainage pump of the present disclosure;
Fig. 4 is an A-A plane section view of Fig. 3 of the present disclosure;
Fig. 5 is a mounting exploded schematic view of the double-head drainage pump and a filter of the present disclosure;
Fig. 6 is a stereoscopic structure front view of the filter of the present disclosure;
Fig. 7 is a stereoscopic structure rear view of the filter of the present disclosure;
Fig. 8 is a stereoscopic structure schematic view of a second check structure of the present disclosure;
Fig. 9 is a partial enlarged view of Fig. 4 of the present disclosure;
Fig. 10 is a stereoscopic structure front view of a strengthened connector of the present disclosure;
Fig. 11 is a stereoscopic structure rear view of the strengthened connector of the present disclosure;
Fig. 12 is a stereoscopic structure front view of a mounting damping structure of the present disclosure;
Fig. 13 is a stereoscopic structure rear view of the mounting damping structure of the present disclosure;
Fig. 14 is a front view of the mounting damping structure of the present disclosure;
Fig. 15 is a B-B plane section view of Fig. 14 of the present disclosure.

Reference signs in the drawings: 1-first drainage motor; 2-first water outlet; 3-first check structure; 4-first pump housing; 5-first pump housing mounting part; 6-second water outlet; 7-second check structure; 8-water inlet; 9-second pump housing; 10-second drainage motor; 11-strengthened connector; 12-washing machine mounting plate; 13-filter; 14-mounting damping structure; 15-connector; 401-first pump housing body; 402-water inlet pipe; 403-first water outlet pipe; 404-third water outlet pipe; 701-check part; 702-connecting column; 703-mounting part; 901-second pump housing water inlet; 902-second water outlet pipe; 1101-first mounting hole; 1102-first connecting part; 1103-second mounting hole; 1104-second connecting part; 1105-connecting part; 1106-mounting clamping position; 1107-supporting part; 1108-second supporting mounting part; 1109-supporting mounting leg; 1110-first supporting mounting part; 1111-supporting rib; 1301-water inlet part; 1302-second water outlet part; 1303-first water outlet part; 1304-filter mounting part; 1305-frame-shaped body; 1306-first side wall; 1307-second side wall; 1308-bottom wall; 1309-water inlet hole; 1310-closed base; 1401-first damping part; 1402-second damping part; 1403-clip; 1404-first damping chamber; 1405-second damping upper chamber; 1406-second damping lower chamber; 1407-convex rib position.

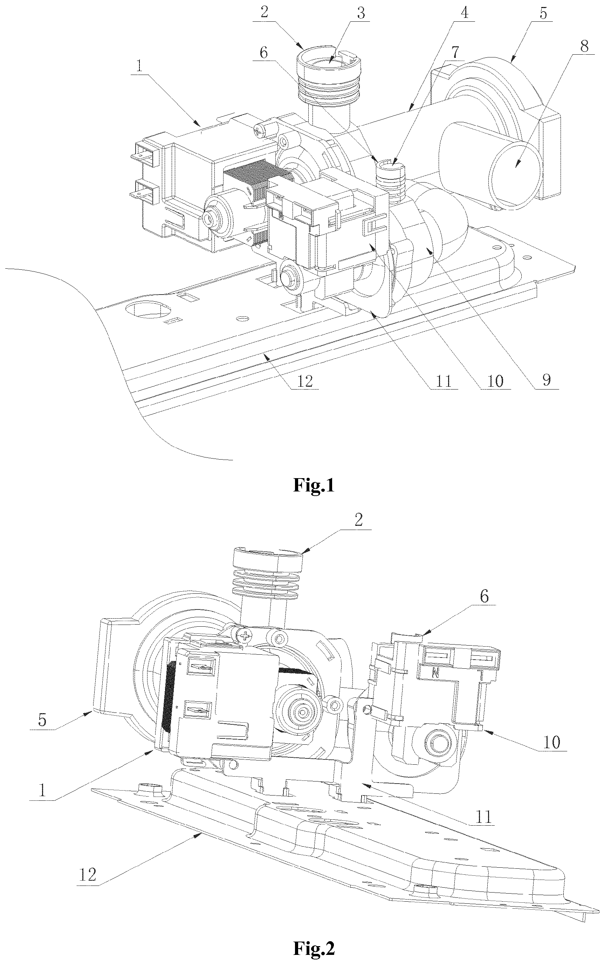

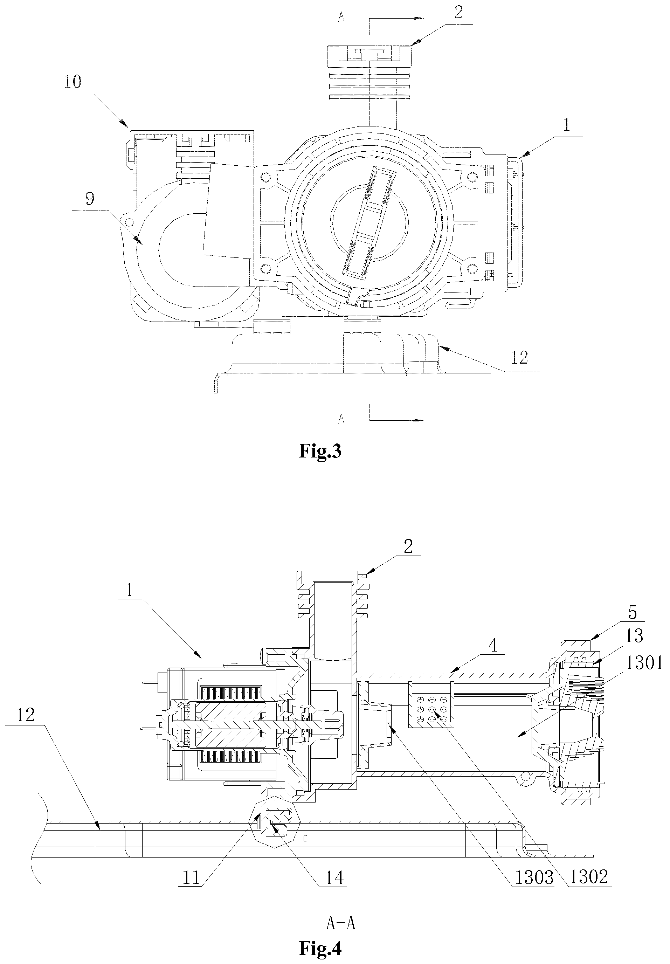

As shown in Fig. 1, Fig. 2, Fig. 3, Fig. 4 and Fig. 5, the double-head drainage pump of the washing machine disclosed by the present disclosure particularly adopts the following technical scheme.

A double-head drainage pump of a washing machine, comprises a pump housing in which a water inlet 8 is formed, at least one first water outlet 2 and at least one second water outlet 6 are formed in the pump housing. A first drainage motor 1 is mounted on the pump housing corresponding to the first water outlet 2 and a second drainage motor 10 is mounted on the pump housing corresponding to the second water outlet 6. The first drainage motor 1 controls opening/closing of the first water outlet 2, and the second drainage motor 10 controls opening/closing of the second water outlet 6.

In the double-head drainage pump of the washing machine, provided by the disclosure, the first water outlet 2 and the second water outlet 6 which share one water inlet are formed in the pump housing. The first water outlet 2 is used for realizing drainage of the washing machine, and the second water outlet 6 is used for realizing water reusing drainage, so that the double-head drainage pump disclosed by the present disclosure can be suitable for the drum washing machine with a water reusing function and is high in integration level of the whole structure, simple in structure and easy to mount.

The pump housing of the double-head drainage pump disclosed by the present disclosure at least comprises a first pump housing 4 and a second pump housing 9 which internally communicate with each other. The water inlet 8 and the first water outlet 2 are formed in the first pump housing 4, and the second water outlet 6 is formed in the second pump housing 9; and the first drainage motor 1 is mounted on the first pump housing 4, and the second drainage motor 10 is mounted on the second pump housing 9.

The pump housing of the present disclosure realizes internal communication but is not integrally designed, and comprises two parts including the first pump housing 4 and the second pump housing 9 which realizes internal mutual communication, so that the first pump housing 4 and the second pump housing 9 can be separately designed according to actual drainage needs. Particularly, the first pump housing 4 and the second pump housing 9 mainly depend on drainage lifts of the first water outlet 2 and the second water outlet 6, and generally, the larger the drainage lifts of drainage holes are, the larger the volumes of the arranged pump housings are.

However, because the second water outlet 6 is connected to a water reusing system in the actual process, and the water reusing system needs to carry out a filter process on washing water, the drainage lift of the second water outlet 6 needs to be smaller than that of the first water outlet 2 so as to ensure sufficient filtering to reach good filtering effects. Therefore, the volume of the second pump housing 9 needs to be smaller than that of the first pump housing 4. In addition, with the design that the volume of the second pump housing 9 is smaller than that of the first pump housing 4, the volume of the whole structure of the double-head drainage pump disclosed by the present disclosure can be reduced, so that too long length of the double-head drainage pump in a certain direction is prevented, and mounting is more convenient.

Therefore, the double-head drainage pump disclosed by the present disclosure can realize the effects of water reusing and drainage and can replace the following complex structures and parts, such as a three-way valve.

In the present disclosure, because the design manner that the volume of the second pump housing 9 is smaller than that of the first pump housing 4 is adopted, the water inlet 8 needs to be formed in the first pump housing 4, so that the water inlet quantity of the water inlet 8 can be increased as much as possible. It ensures smooth water outgoing of the first water outlet 2 and the second water outlet 6 and avoids the condition that drainage discontinuous of the drainage holes as the water inlet quantity of the water inlet 8 is limited by the volume of the second pump housing 9.

Specifically, a third water outlet which communicates with the water inlet 8 is also formed in the first pump housing 4 of the present disclosure, and the second pump housing 9 is connected with the third water outlet so as to realize internal mutual communication between the first pump housing 4 and the second pump housing 9.

The first pump housing 4 of the present disclosure comprises a first pump housing body 401, a water inlet pipe 402, a first water outlet pipe 403 and a third water outlet pipe 404.Wherein the first pump housing body 401 is internally provided with a hollow channel, the water inlet pipe 402, the first water outlet pipe 403 and the third water outlet pipe 404 communicate with the hollow channel of the first pump housing body 401 separately. And the water inlet 8, the first water outlet 2 and the third water outlet are correspondingly formed at the end parts of the water inlet pipe 402, the first water outlet pipe 403 and the third water outlet pipe 404.

Drained water of the drum washing machine disclosed by the present disclosure enters the internal hollow channel of the pump housing body 401 of the first pump housing 4 through the water inlet pipe 402 and then separately enters the first water outlet pipe 403 and the third water outlet pipe 404 which communicate with the hollow channel. And the drained water in the third water outlet pipe 404 enters to the second pump housing 9 so as to separately introduce the drained water into the two pump housings. Drainage of the drained water in the first pump housing 4 is controlled by the first drainage motor 1 and the second drainage motor 10 separately, while the drained water in the second pump housing 9 is only controlled by the second drainage motor 10.

As a preferred implementation of the present disclosure, the water inlet pipe 402, the first water outlet pipe 403 and the third water outlet pipe 404 communicate with the side wall of the first pump housing body 401.The third water outlet pipe 404 and the water inlet pipe 402 are arranged on a same plane, and the third water outlet pipe 404 and the first water outlet pipe 403 are arranged on different planes. In this way, the second pump housing 9 is arranged on one side of the first pump housing 4 in the manner that the second pump housing 9 and the first pump housing 4 are in parallel, and the whole axial length of the double-head drainage pump disclosed by the present disclosure is reduced.

Further preferably, the third water outlet pipe 404 and the water inlet pipe 402 are arranged on the same side of the first pump housing body 401. In this way, the second pump housing 9 and the water inlet pipe 402 are arranged on the same side of the first pump housing 4, so that transverse width during mounting is reduced, and mounting is more convenient.

For enabling drainage to be smooth and residual pollutants to successfully flow into the pump housing so as to facilitate manual cleaning, as a preferred implementation of the present disclosure, the water inlet 8 of the water inlet pipe 402 is formed in the manner of slanting upward by 5-15 degrees.

How to realize communication between the second pump housing 9 and the first pump housing 4 is an important technical problem needing to be solved by the present disclosure, specifically, the following two technical schemes can be adopted.

Scheme I is that the third water outlet pipe 404 of the present disclosure is an L-shaped pipeline, one end of the third water outlet pipe 404 integrally communicates with the side wall of the first pump housing 4, and the other end integrally communicates with the inner part of the second pump housing 9. In this way, the first pump housing 4 and the second pump housing 9 are integrally formed, the industrial integration degree is higher, and the assembly is simpler and more convenient.

Scheme II is that a second pump housing water inlet 901 which communicates with the second water outlet 6 is formed in the second pump housing 9 of the present disclosure and is connected with the third water outlet of the first pump housing 4. Specifically, the second pump housing water inlet 901 communicates with the third water outlet of the first pump housing 4 through a connector 15, and preferably, the connector 15 is a soft water pipe. In this way, the first pump housing 4 and the second pump housing 9 are assembled after being separately processed, so that processing is simpler; while connection is easier to realize by adopting the soft water pipe, and the processing accuracy requirements are reduced.

In a word, the first pump housing 4 and the second pump housing 9 are arranged in a split mode, and the second pump housing 9 communicates with the first pump housing 4 through the connector 15; or the first pump housing 4 and the second pump housing 9 are integrally formed.

As a preferred implementation of the present disclosure, the whole body of the first pump housing 4 of the present disclosure adopts a columnar structure with a hollow channel inside, specifically a cylindrical structure. An end part of one end of the columnar structure is provided with the first drainage motor 1, and the water outlet direction of the first water outlet 2 is vertically upward, i.e., the axis of the first water outlet 2 is arranged perpendicular to the medial axis of the columnar structure. An end part of the other end of the columnar structure is a disc-shaped first pump housing mounting part 5, a threaded mounting hole is formed in the first pump housing mounting part 5. And the first pump housing 4 is mounted on the inner wall of a front panel of the drum washing machine through threads. The third water outlet pipe 404 and the water inlet pipe 402 both communicate with the side wall of the columnar structure and are located on the same side.

As a preferred implementation of the present disclosure, the drainage lift of the second water outlet 6 is smaller than that of the first water outlet 2. Specifically, the drainage lift of the second water outlet 6 is 0.2-0.8m, so that the second water outlet 6 is more suitable for effectively carrying out filter treatment on reused water in the water reusing system.

As a preferred implementation of the present disclosure, a first check structure 3 is arranged on the first water outlet 2, a second check structure 7 is arranged on the second water outlet 6. The second check structure 7 is integrally formed by a soft material and comprises an annular mounting part 703 and a disc-shaped check part 701, the mounting part 703 sleeves the pipe wall of the second water outlet 6, and the check part 701 covers the second water outlet 6.

The check structure is arranged at each of the two water outlets of the double-head drainage pump disclosed by the present disclosure, so that water reflux can be avoided, and secondary pollution is avoided.

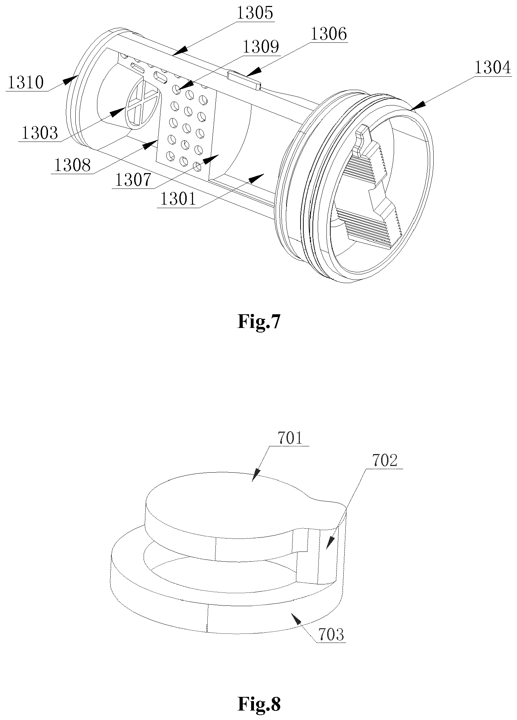

As the drainage lift of the second water outlet 6 is smaller, the inside diameter of the second water outlet 6 is also smaller, and the second check structure 7 with a simple structure is designed according to such structure characteristics of the second water outlet 6 in the present disclosure. As shown in Fig. 8, the second check structure 7 is integrally formed by the soft material and comprises the mounting part 703, the check part 701 and a connecting column 702 for connecting the mounting part 703 and the check part 701.The mounting part 703 sleeves the pipe wall of the second water outlet 6, and the check part 701 covers the second water outlet 6 under a natural state. The check part 701 is opened under the action of a water flow when the water flow flows out from the second water outlet 6 and more tightly covers the second water outlet 6 under the action of a reverse water flow. Therefore, the second water outlet 6 can only carry out one-way drainage, water cannot reversely flow back into the second pump housing 9, and the check action is realized. Therefore, the second check structure 7 of the present disclosure is simpler in structure, more convenient to mount and obvious in check effect.

### Embodiment 1

As shown in Fig. 1, Fig. 2, Fig. 3, Fig. 4, Fig. 9, Fig. 10 and Fig. 11, the present embodiment discloses a strengthened connector suitable for a double-head drainage pump of a washing machine. The double-head drainage pump comprises at least two drainage pumps which share one water inlet 8, the two drainage pumps of the double-head drainage pump are integrally connected through the strengthened connector 11, and the strengthened connector 11 is fixedly mounted on a washing machine mounting plate 12.

With different structures of the two drainage pumps of the double-head drainage pump, the double-head drainage pump is uneven in stress, so that vibration is easy to generate, and the two drainage pumps are prone to damage during the vibration if connection between the two drainage pumps is not firm enough. Therefore, the strengthened connector 11 of the present embodiment enables the two drainage pumps to be firmly connected together on account of the structural characteristics of the double-head drainage pump, and the two drainage pumps are fixedly mounted on the washing machine mounting plate 12 through the strengthened connector 11 to guarantee the stability of mounting.

As being used for enabling the two drainage pumps of the double-head drainage pump to be integrally connected with each other, the strengthened connector 11 of the double-head drainage pump disclosed by the present embodiment comprises two mounting parts for respectively mounting the two drainage pumps. And the two mounting parts are arranged in a fore and aft staggering manner in the axial direction of the double-head drainage pump, so that the two drainage pumps are arranged in the fore and aft staggering manner in the axial direction.

The strengthened connector 11 of the present embodiment comprises two mounting parts, and the two mounting parts are staggered fore and aft in the axial direction of a pump housing so as to realize replacement of a radial space with an axial space. Specifically, because pump housing connecting parts for connecting drainage motors are arranged on the pump housing, the radial sizes of the pump housing connecting parts are generically larger to ensure the mounting stability of the drainage motors, and the two pump housing connecting parts are integrally connected with each other through the strengthened connector 11 at the same time and are mounted on the washing machine mounting plate 12. If the two pump housing connecting parts are arranged on the same radial end surface, the radial mounting distance between the two pump housing connecting parts needs to be enlarged, while the two mounting parts of the strengthened connector 11 are arranged in the fore and aft staggering manner in the axial direction of the pump body, so that the two pump housing connecting parts are mounted in the fore and aft staggering manner in the axial direction. And the adjacent parts of the two pump housing connecting parts can be axially overlapped, and the mounting distance on the same radial end surface is saved.

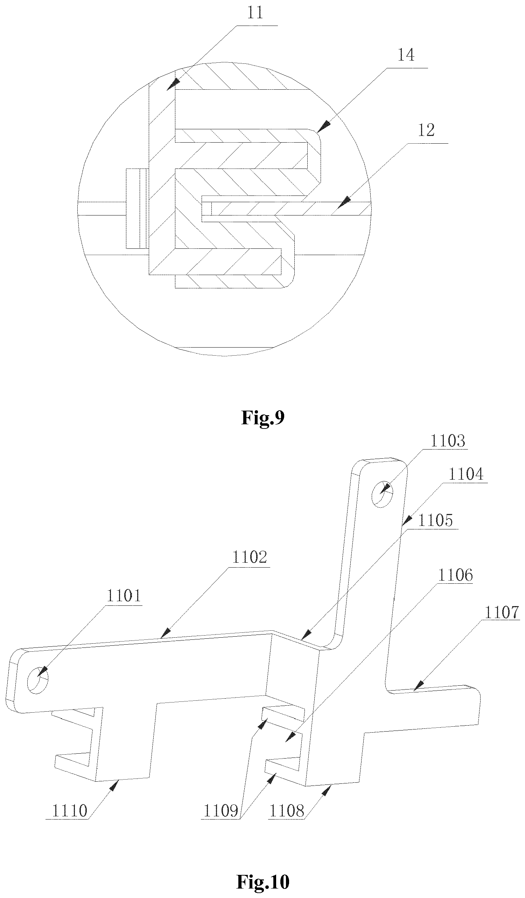

As shown in Fig. 9, Fig. 10 and Fig. 11, the strengthened connector comprises a first connecting part 1102, a second connecting part 1104 and a connecting part 1105, wherein the first connecting part 1102 and the second connecting part 1104 are arranged in the fore and aft staggering manner in the axial direction of the double-head drainage pump, and the connecting part 1105 is arranged between the first connecting part 1102 and the second connecting part 1104 to connect the first connecting part 1102 and second connecting part 1104 for one piece.

In the present embodiment, the first connecting part 1102 is connected with one drainage pump of the double-head drainage pump, the second connecting part 1104 is connected with the other drainage pump, and the first connecting part 1102 and the second connecting part 1104 are arranged in the fore and aft staggering manner and are integrally connected with each other through the connecting part 1105.Therefore, the two drainage pumps of the double-head drainage pump are integrally connected with each other through the strengthened connector 11 and are arranged in the fore and aft staggering manner, and the radial mounting space is saved.

A first mounting hole 1101 used for being connected with the double-head drainage pump is formed in the first connecting part 1102 of the double-head drainage pump disclosed by the embodiment. A second mounting hole 1103 used for being connected with the double-head drainage pump is formed in the second connecting part 1104, fixed mounting can be carried out by adopting bolts or screws, and the mounting manner is simpler and more convenient.

In the present embodiment, the strengthened connector 11 of the double-head drainage pump is fixedly mounted on the washing machine mounting plate 12, so that the double-head drainage pump is fixedly mounted on the washing machine mounting plate 12.And specifically, a part of the lower part of the first connecting part 1102 extends downward to form a first supporting mounting part 1110, a part of the lower part of the second connecting part 1104 extends downward to form a second supporting mounting part 1108, and the first supporting mounting part 1110 and the second supporting mounting part 1108 are used for being mounted on the washing machine mounting plate 12.

The supporting mounting parts connected with the washing machine mounting plate 12 are arranged at the lower parts of the corresponding mounting parts of the strengthened connector 11 of the double-head drainage pump disclosed by the embodiment, so that multi-point supporting action is applied to the strengthened connector 11, and mounting stability of the double-head drainage pump is further guaranteed.

Specifically, in order to enable the strengthened connector 11 of the double-head drainage pump disclosed by the embodiment to be fixedly mounted on the washing machine mounting plate 12, at least two supporting mounting legs 1109 are arranged on each of the first supporting mounting part 1110 and the second supporting mounting part 1108 in the perpendicular direction, and a mounting clamping position 1106 used for being mounted on the washing machine mounting plate 12 in a clamping manner is formed between every two corresponding supporting mounting legs 1109.

The present embodiment realizes fixed mounting of the strengthened connector 11 by adopting a manner of enabling the mounting clamping position 1106 formed between every two corresponding supporting mounting legs 1109 to be mounted in a clamping manner on the washing machine mounting plate 12.Correspondingly, mounting holes are formed in the washing machine mounting plate12, the first supporting mounting part 1110 and the second supporting mounting part 1108 go deep into the corresponding mounting holes separately, and the two supporting mounting legs 1109 are mounted on the washing machine mounting plate 12 in a clamping manner So the mounting manner of the strengthened connector 11 of the double-head drainage pump disclosed by the embodiment is simpler and more convenient. In addition, a damping cushion can sleeve each of the supporting mounting legs 1109, so that the damping action on the double-head drainage pump is realized, and noise in the using process is reduced.

In order to further strengthen the supporting action of the strengthened connector 11 on the double-head drainage pump, the first connecting part 1102 and a supporting part 1107 of the strengthened connector 11 of the present embodiment extend in the perpendicular direction to form two supporting ribs 1111. And the supporting ribs 1111 are both supported on the upper surface of the washing machine mounting plate 12. The supporting stability can be further strengthened through the supporting action of the supporting ribs 1111.

Further, the supporting ribs 1111 are arranged in parallel with the supporting mounting legs 1109, and the supporting ribs 1111 and the supporting mounting legs 1109 are arranged on the same side of the strengthened connector 11 or arranged on the two sides of the strengthened connector 11 separately. Preferably, the supporting ribs 1111 and the supporting mounting legs 1109 are arranged on the two sides of the strengthened connector 11 separately, so that effective supporting action can be applied to the two sides of the strengthened connector.

In order to further reduce the length of the pump housing in the radial direction, the mounting directions of the two drainage motors are perpendicular to each other. Therefore, in the present embodiment, the first connecting part 1102 of the strengthened connector 11 is transversely arranged, the second connecting part 1104 is vertically arranged, and a part of one side of the second connecting part 1104 transversely extends to form the supporting part 1107, and the supporting part 1107 and the first connecting part 1102 are arranged in reverse directions. With vertical arrangement of the second connecting part 1104 disclosed by the embodiment, support on the second connecting part 1104 after connection of the double-head drainage pump is insufficient or poor, so that a part of one side of the second connecting part 1104 transversely extends to form the supporting part 1107, and the supporting part 1107 can further support the second connecting part 1104 to ensure the whole mounting stability.

The strengthened connector 11 of the double-head drainage pump disclosed by the embodiment is an integrally stamped sheet metal piece, so that the integrity of the strengthened connector 11 is stronger, and the connection stability effect is better.

Specifically, the two drainage pumps of the double-head drainage pump of the double-head drainage pump disclosed by the present embodiment respectively comprise a first pump housing 4 and a second pump housing 9 which internally communicate with each other. And the water inlet 8 is formed in the first pump housing 4; and the strengthened connector comprises two mounting parts used for mounting the first pump housing 4 and the second pump housing 9 correspondingly.

Further, the first pump housing 4 and the second pump housing 9 are arranged in parallel, a first pump housing mounting part is arranged at the end part of one end of the first pump housing 4 and a second pump housing mounting part is arranged at the end part of one end of the second pump housing 9, and a first drainage motor 1 is mounted on the first pump housing mounting part and a second drainage motor 10 is mounted on the second pump housing mounting part. The two mounting parts of the strengthened connector are correspondingly connected with the first pump housing mounting part and the second pump housing mounting part, so that the first pump housing mounting part and the second pump housing mounting part are arranged in the fore and aft staggering manner in the axial direction.

The strengthened connector 11, the first drainage motor 1 and the second drainage motor 10 of the present embodiment are all connected to the pump housing mounting parts, so that the strengthened connector 11 and the drainage motors can share one mounting hole position without independently forming another hole position, and mounting is simpler.

In the present embodiment, the double-head drainage pump comprises the pump housing in which the water inlet 8, at least one first water outlet 2 and at least one second water outlet 6 are formed. The first drainage motor 1 for controlling opening/closing of the first water outlet 2 is mounted on the pump housing corresponding to the first water outlet 2, and the second drainage motor 10 for controlling opening/closing of the second water outlet 6 is mounted on the pump housing corresponding to the second water outlet 6; and the strengthened connector enables the first drainage motor 1 and the second drainage motor 10 to be integrally connected with each other.

### Embodiment 2

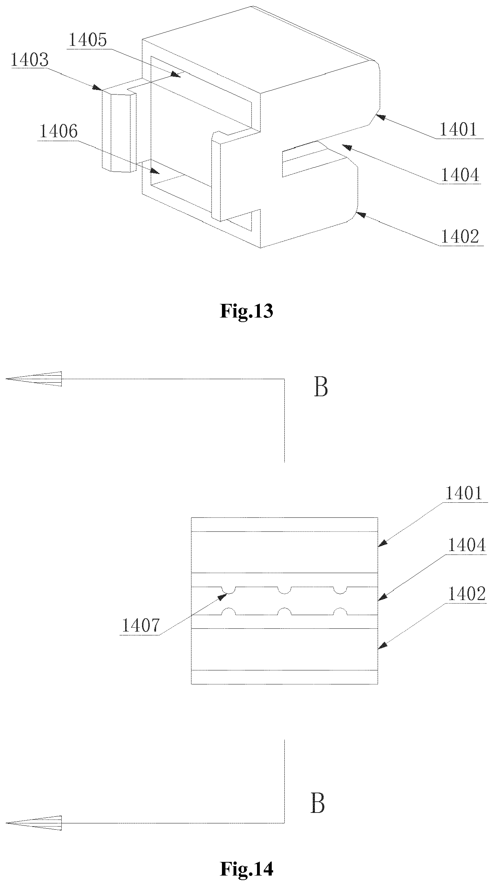

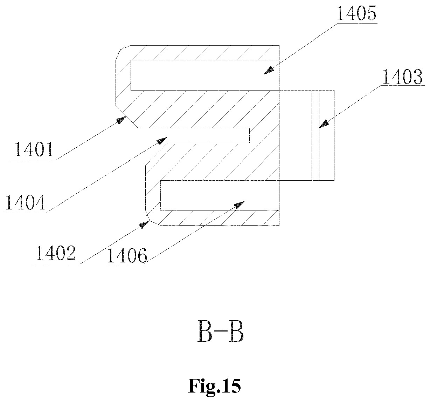

As shown in Fig. 1, Fig. 4, Fig. 9, Fig. 12, Fig. 13, Fig. 14 and Fig. 15, the present embodiment discloses a mounting damping device suitable for a double-head drainage pump of a washing machine. The double-head drainage pump comprises at least two drainage pumps which share one water inlet 8, the two drainage pumps are integrally connected with each other through a strengthened connector, the strengthened connector is mounted on a washing machine mounting plate 12, and the mounting damping device 14 used for relieving vibration of the double-head drainage pump is arranged between the strengthened connector and the washing machine mounting plate 12.

Because the double-head drainage pump comprises two drainage pumps adopting different structures, the two drainage pumps are integrally connected with each other through the strengthened connector 11 and are fixedly mounted on the washing machine mounting plate 12 through the strengthened connector 11. Because the two drainage pumps are uneven in stress in the working process of the double-head drainage pump, vibration and noise are easy to generate, and the two drainage pumps are prone to damage. Therefore, the mounting damping device 14 of the embodiment is arranged between the strengthened connector 11 and the washing machine mounting plate 12, and vibration and noise of the double-head drainage pump can be effectively relieved.

As being arranged between the strengthened connector 11 and the washing machine mounting plate 12, the mounting damping device 14 of the double-head drainage pump disclosed by the embodiment needs to be assembled with both of the strengthened connector 11 and the washing machine mounting plate 12 together and has the damping action relative to both of the strengthened connector 11 and the washing machine mounting plate 12. The mounting damping device of the double-head drainage pump disclosed by the embodiment comprises a main body made of an elastic soft material, and a first damping chamber 1404 used for allowing the washing machine mounting plate 12 to be assembled and second damping chamber used for allowing the strengthened connector to be assembled are arranged on the main body.

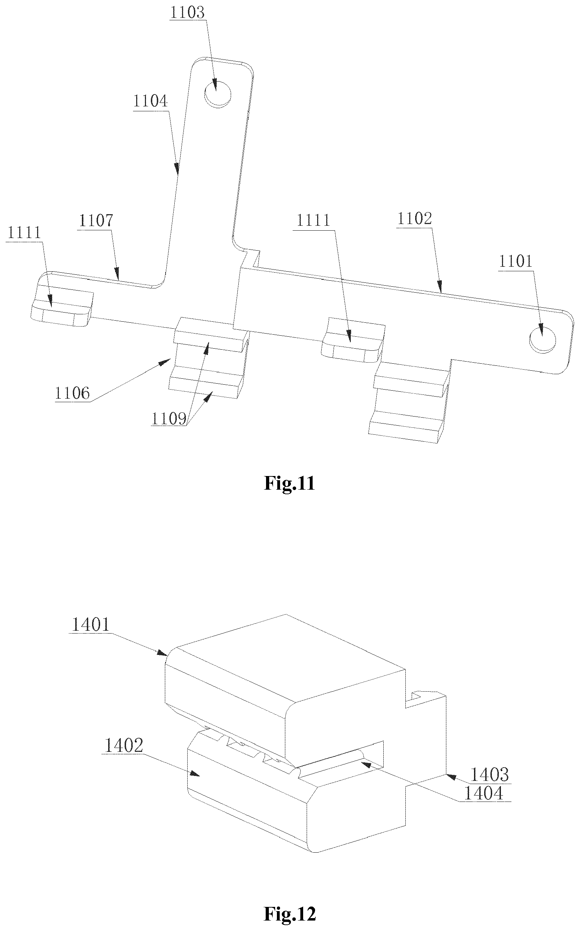

As shown in Fig. 12, Fig. 13, Fig. 14 and Fig. 15, the main body of the mounting damping device of the present embodiment adopts a groove-shaped structure, a notch is formed in the middle part of the groove-shaped structure and clamps on the washing machine mounting plate 12, and the first damping chamber 1404 is the notch adopting the groove-shaped structure.

Further, a bevel angle is formed at the notch, and a plurality of convex rib positions 1407 are arranged on the upper wall and the lower wall of the notch correspondingly. The bevel angle is formed at the notch, so that mounting is convenient. The strip-shaped convex rib positions are arranged on the upper wall and the lower wall of the notch of the embodiment correspondingly and are in contact with the washing machine mounting plate after being assembled, so that damping action can be achieved and resonance can be avoided.

The first damping chamber 1404 of the present embodiment divides the main body into a first damping part 1401 and a second damping part 1402 which are mutually connected, and the second damping chamber is formed in the first damping part 1401 and/or the second damping part 1402.

Further, the second damping chamber is a hollow chamber formed in the inner part/parts of the first damping part 1401 and/or the second damping part 1402, an opening is formed in one side, facing the first damping part 401 and/or the second damping part 1402, of the chamber, and the direction of the opening is opposite to that of an opening of the first damping chamber 1404. This is mainly because one side of the mounting damping device 14 of the embodiment is mounted on the washing machine mounting plate 12, and the strengthened connector 11 is mounted on the other side of the mounting damping device 14.

Specifically, the upper end of the groove-shaped structure is the first damping part 1401, the lower end of the groove-shaped structure is the second damping part 1402, and two mounting grooves are correspondingly formed in the inner parts of the back sides of the upper end and the lower end of the groove-shaped structure and the mounting grooves are the second damping chamber.

Clips 1403 used for limiting and fixing the strengthened connector are arranged on the main body of the mounting damping device of the present embodiment and are symmetrically arranged on the two sides of the second damping chamber.

The shape of the mounting damping device of the embodiment adopts the groove-shaped structure, the lengths of the upper end and the lower end of the groove-shaped structure can be different and the length of the upper end can be longer while the length of the lower end can be shorter, the first damping chamber is the notch of the groove-shaped structure, and the bevel angle is formed at the notch to facilitate mounting. The two mounting grooves are formed in the inner parts of the back sides of the upper end and the lower end of the groove-shaped structure, and the second damping chamber are the mounting grooves. The clips are arranged on the two sides of each of the mounting grooves so as to prevent the mounting damping device from falling off in the assembly process or in the transportation process after assembly. The strip-shaped convex rib positions are arranged on the upper wall and the lower wall of the notch correspondingly and are in contact with the washing machine mounting plate after being assembled, so that damping action can be achieved and resonance can be avoided.

The groove-shaped structure of the mounting damping device of the embodiment is assembled from mounting holes in the washing machine mounting plate, the notch of the groove-shaped structure clamps on the upper side and the lower side of the washing machine mounting plate so as to achieve the action of upper and lower damping and the limiting function.

In order to save raw materials, according to the embodiment, the wall thicknesses are set differently, the thickness of a wall which is in contact with the washing machine mounting plate is larger to improve the damping effect, and the thicknesses of other walls are smaller.

The supporting mounting parts used for being mounted on the washing machine mounting plate 12 are arranged at the lower part of the strengthened connector of the present embodiment, supporting mounting legs for being positioned and supported on the washing machine mounting plate 12 are arranged on each supporting mounting part, and the mounting damping devices are arranged on the corresponding supporting mounting legs.

Specifically, the strengthened connector comprises two mounting parts used for mounting the two drainage pumps, parts of the lower parts of the two mounting parts extend downward to form a first supporting mounting part 1110 and a second supporting mounting part 1108, and the mounting damping devices are mounted on the first supporting mounting part 1110 and the second supporting mounting part 1108.

Further, at least two supporting mounting legs 1109 are arranged on each of the first supporting mounting part 1110 and the second supporting mounting part 1108 in the perpendicular direction of the first supporting mounting part 1110 and the second supporting mounting part 1108 and are mounted in the two second damping chambers, and the first supporting mounting part 1110 and the second supporting mounting part 1108 are mounted between the two clips 1403 in a limiting manner.

At least two supporting mounting legs 1109 are arranged on each of the first supporting mounting part 1110 and the second supporting mounting part 1108 of the embodiment, and correspondingly, the second damping chamber comprises a second damping upper chamber 1405 and a second damping lower chamber 1406 so as to realize assembly with the supporting mounting legs 1109 together.

In the present disclosure, according to the specific structure of the strengthened connector 11 and the mounting manner of the mounting plate 12 mounted on the washing machine, the first damping chamber 1404 which is assembled with the washing machine mounting plate 12 together and the second chamber for assembling the supporting mounting legs 1109 of the strengthened connector 11 are respectively arranged on the main body of the mounting damping device. Therefore, the strengthened connector 11 of the embodiment is not in direct contact with the washing machine mounting plate 12 but is fixedly connected with the washing machine mounting plate 12 through the supporting mounting legs 1109.Vibration and noise generated by the strengthened connector 11 and the washing machine mounting plate 12 in the working process of the double-head drainage pump can be effectively reduced, and a user can acquire better user experience.

### Embodiment 3

As shown in Fig. 1, Fig. 3, Fig. 4, Fig. 5, Fig. 6 and Fig. 7, the present embodiment discloses a filter suitable for a double-head drainage pump of a washing machine. The double-head drainage pump comprises a pump housing, a water inlet and at least two water outlets sharing the water inlet are formed in the pump housing, opening/closing of the two water outlets are respectively controlled by two drainage motors. The filter 13 is arranged among the two water outlets and the water inlet inside the pump housing and the filter 13 comprises at least two water outlet parts corresponding to the two water outlets, and a filter part is arranged on at least one water outlet part.

The filter 13 of the embodiment is arranged inside the pump housing of the double-head drainage pump and located among the two water outlets and the water inlet, so that drained water of the washing machine is drained from the two water outlets after being filtered. The filter 13 of the embodiment can filter out threads and sundries in the drained water so as to prevent the threads and the sundries from blocking the water outlets.

Additionally, due to different drainage actions of the two water outlets of the present embodiment, the filter part can be arranged on only one of the two water outlet parts according to the concrete design needs. Thus, the structure of the filter is simplified, and the manufacturing cost is reduced on the basis of meeting the filter requirements.

The filter of the present embodiment comprises a frame-shaped body 1305, wherein a water inlet part 1301 and a second water outlet part 1302 are arranged between two side frames of the frame-shaped body 1305, and a first water outlet part 1303 is arranged at the end part, inside the pump housing, of the frame-shaped body 1305.

The drained water of the first water outlet part 1303 of the embodiment is directly drained out from the washing machine, so that the drained water is not filtered to a great extent, and only the threads and the sundries in the drained water need to be filtered out; and in addition, excessive filtering can influence the drainage speed of the first water outlet part 1303.So the first water outlet part 1303 of the embodiment directly communicates with the water inlet part 1301.

Further, a cross rib position is arranged on the first water outlet part 1303 of the embodiment to be used for filtering out the threads and the sundries in the drained water and preventing the threads and the sundries from blocking the water outlet corresponding to the first water outlet part 1303.

As a preferred implementation of the embodiment, the end part of one end, inside the pump housing, of the frame-shaped body 1305 is a closed base 1310, and the closed base 1310is of a disc shape and is in contact with the inner wall of the pump housing. The first water outlet part 1303 is a boss-shaped water outlet formed in the closed base 1310.

The drained water of the water outlet corresponding to the second water outlet part 1302 of the embodiment is introduced into a water reusing system of the washing machine, and the water reusing system reuses the drained water after filtering and purifying the drained water. So the requirement for the filtering degree of the water drained from the second water outlet part 1302 is higher, and the filter part with a higher filtering degree needs to be arranged on the second water outlet part 1302 so as to filter out the threads or the sundries to the maximum degree.

As a preferred implementation of the embodiment, the second water outlet part 1302 is in tight contact with the pump housing, and the filter part is arranged on the second water outlet part 1302.

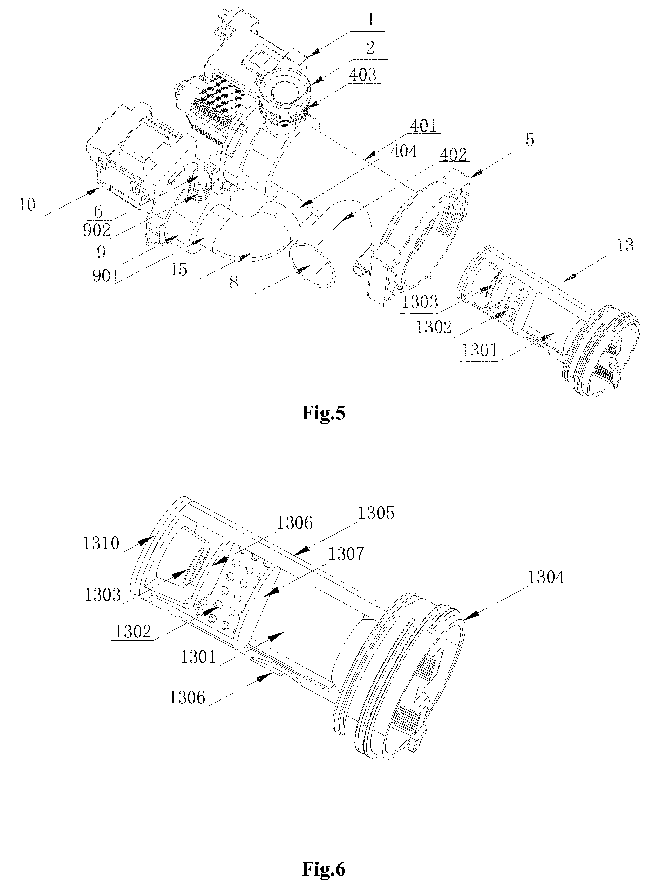

As shown in Fig. 6 and Fig. 7, specifically, the second water outlet part 1302 comprises a bottom wall 1308, a first side wall 1306 and a second side wall 1307, the first side wall 1306 and the second side wall 1307 are connected with the bottom wall 1308, the bottom wall 1308 is connected with the two side frames of the frame-shaped body 1305. A water outlet chamber is formed among the bottom wall 1308, the first side wall 1306, the second side wall 1307 and the inner wall of the pump housing and the water outlet chamber is respectively communicated with one water outlet and one water inlet.

Further, a plurality of water inlet holes 1309 are formed in the bottom wall 1308 to form the filter part, and the first side wall 1306 and the second side wall 1307 are in tight contact with the inner wall of the pump housing on one side of the bottom wall 1308, so that a water flow can enter the water outlet chamber from the filter part only.

The pore diameter of each water inlet hole 1309 of the filter disclosed by the embodiment is small to filter the drained water to the maximum degree, and besides, the amount of the water inlet holes 1309 is large to ensure the drainage lift of the water outlet corresponding to the second water outlet part 1302.

Further, one side of the bottom wall 1308 extends toward and is connected with the end part of the first water outlet part 1303, and the first side wall 1306 is arranged along and is connected with the aforementioned side of the bottom wall 1308.

In this manner, on one hand, the area of the bottom wall 1308 can be increased, and the filtering surface and the water inlet quantity of the second water outlet part 1302 are also increased. On the other hand, the bottom wall 1308 is connected with three surfaces of the frame-shaped body 1305, so that connection is more stable.

Because the first water outlet part 1303 and the second water outlet part 1302 of the filter disclosed by the embodiment need to be arranged corresponding to the two water outlets, or filter effects on water drained from the second water outlet part 1302 cannot be realized. Therefore, as a preferred implementation of the embodiment, a limiting block 1306 is arranged on at least one side frame of the frame-shaped body 1305 of the filter of the embodiment, a limiting chute is formed in the inner wall of the pump housing, and the limiting block 1306 slides into the pump housing along the limiting chute, so that the two water outlet parts of the filter and the two water outlets of the double-head drainage pump are mounted in a corresponding manner.

Meanwhile, a conventional filter is mounted in the pump housing in a threaded mounting manner, while the filter 13 cannot rotate and then cannot be mounted in a threaded manner by limiting the limiting block 1306 of the filter 13 in the chute of the pump housing. In order to enable the filter 13 of the embodiment to be mounted in the pump housing without changing the threaded mounting manner, as a preferred implementation of the embodiment, a filter mounting part 1304 capable of freely rotating is connected to the other end part of the frame-shaped body 1305 of the filter disclosed by the embodiment. The filter mounting part 1304 is fixedly mounted on the pump housing, and the water inlet part 1301 is formed between the second water outlet part 1302 and the filter mounting part 1304.

Specifically, a neck is arranged at the other end part of the frame-shaped body 1305, and the filter mounting part 1304 is clamped in the neck and can freely rotate.

As a preferred implementation of the embodiment, the pump housing at least comprises a first pump housing 4 and a second pump housing 9 which internally communicate with each other, a water inlet 8 and a first water outlet 2 are formed in the first pump housing 4, and a second water outlet 6 is formed in the second pump housing 9.The filter is mounted in a chamber inside the first pump housing 4, one water outlet part of the filter is arranged corresponding to the first water outlet 2, and the other water outlet part is arranged corresponding to the connecting position of the first pump housing 4 and the second pump housing 9.

Specifically, a third water outlet which commutates with the water inlet 8 is also formed in the first pump housing 4, and the second pump housing 9 is connected with the third water outlet. And the first water outlet part 1303 is arranged corresponding to the first water outlet 2, and the second water outlet part 1302 is arranged corresponding to the third water outlet.

The above mentioned should not make any limit in term of form of the present disclosure, but is merely used as preferred embodiments of the present disclosure, and although the above mentioned as the preferred embodiments is disclosed, the preferred embodiments are not intended to limit the present disclosure. Various changes or modifications can be made by the persons skilled in the art according to the prompted technical content without departing from the scope of the appended claims.

## Claims

1. A double-head drainage pump of a washing machine, comprising a pump housing in which a water inlet (8) is formed, and wherein at least one first water outlet (2) and at least one second water outlet (6) are formed in the pump housing,
a first drainage motor (1) is mounted on the pump housing corresponding to the first water outlet (2) and a second drainage motor (10) is mounted on the pump housing corresponding to the second water outlet (6),
the first drainage motor (1) controls opening/closing of the first water outlet (2), and the second drainage motor (10) controls opening/closing of the second water outlet (6),
wherein the pump housing at least comprises a first pump housing (4) and a second pump housing (9) which internally communicate with each other,
the water inlet (8) and the first water outlet (2) are formed in the first pump housing (4), and the second water outlet (6) is formed in the second pump housing (9),
the first drainage motor (1) is mounted on the first pump housing (4), and the second drainage motor (10) is mounted on the second pump housing (9)
**characterized in that**
the first pump housing (4) and the second pump housing (9) are arranged in parallel, and the second pump housing (9) and the water inlet (8) are arranged on a same side of the first pump housing (4).

2. The double-head drainage pump of the washing machine according to claim 1, **characterized in that** a third water outlet which communicates with the water inlet (8) is also formed in the first pump housing (4), and the second pump housing (9) is connected with the third water outlet.

3. The double-head drainage pump of the washing machine according to claim 2, **characterized in that** the first pump housing (4) comprises a first pump housing body (401), a water inlet pipe (402), a first water outlet pipe (403) and a third water outlet pipe (404),
the first pump housing body (401) is internally provided with a hollow channel, the water inlet pipe (402), the first water outlet pipe (403) and the third water outlet pipe (404) communicate with the hollow channel of the first pump housing body (401) separately,
and the water inlet (8), the first water outlet (2) and the third water outlet are correspondingly formed in the end parts of the water inlet pipe (402), the first water outlet pipe (403) and the third water outlet pipe (404).

4. The double-head drainage pump of the washing machine according to claim 3, **characterized in that** the water inlet pipe (402), the first water outlet pipe (403) and the third water outlet pipe (404) respectively communicate with a side wall of the first pump housing body (401), the third water outlet pipe (404) and the water inlet pipe (402) are arranged on a same plane, and the third water outlet pipe (404) and the first water outlet pipe (403) are arranged on different planes;
preferably, the third water outlet pipe (404) and the water inlet pipe (402) are arranged on a same side of the first pump housing body (401);
and preferably, the water inlet (8) of the water inlet pipe (402) is formed in a manner of slanting upward by 5-15 degrees.

5. The double-head drainage pump of the washing machine according to claim 2, **characterized in that** a second pump housing water inlet (901) which communicates with the second water outlet (6) is formed in the second pump housing (9), and the second pump housing water inlet (901) is communicated with the third water outlet of the first pump housing (4).

6. The double-head drainage pump of the washing machine according to claim 5, **characterized in that** the second pump housing water inlet (901) communicates with the third water outlet of the first pump housing (4) through a connector (15),
and preferably, the connector (15) is a soft water pipe.

7. The double-head drainage pump of the washing machine according to one of claims 1 to 6, **characterized in that** the first pump housing (4) and the second pump housing (9) are arranged in a split mode, and the second pump housing (9) communicates with the first pump housing (4) through a connector (15);
or the first pump housing (4) and the second pump housing (9) are integrally formed.

8. The double-head drainage pump of the washing machine according to one of claims 1 to 7, **characterized in that** a drainage lift of the second water outlet (6) is smaller than a drainage lift of the first water outlet (2);
and preferably, a first check structure (3) for one-way drainage is arranged on the first water outlet (2) and a second check structure (7) for one-way drainage is arranged on the second water outlet (6),
the second check structure (7) is integrally formed by a soft material and comprises a mounting part (703) with annular shape and a check part (701) with disc shape,
the mounting part (703) sleeves a pipe wall of the second water outlet (6), and the check part (701) covers the second water outlet (6).

## Patentansprüche

1. Doppelkopfentwässerungspumpe einer Waschmaschine, umfassend ein Pumpengehäuse, in dem ein Wassereinlass (8) ausgebildet ist, und bei der
mindestens ein erster Wasserauslass (2) und mindestens ein zweiter Wasserauslass (6) in dem Pumpengehäuse ausgebildet sind,
ein erster Entwässerungsmotor (1) an dem Pumpengehäuse entsprechend dem ersten Wasserauslass (2) angebracht ist und ein zweiter Entwässerungsmotor (10) entsprechend dem zweiten Wasserauslass (6) an dem Pumpengehäuse angebracht ist,
der erste Entwässerungsmotor (1) das Öffnen/Schließen des ersten Wasserauslasses (2) steuert und der zweite Entwässerungsmotor (10) das Öffnen/Schließen des zweiten Wasserauslasses (6) steuert,
wobei das Pumpengehäuse mindestens ein erstes Pumpengehäuse (4) und ein zweites Pumpengehäuse (9) aufweist, die innenseitig miteinander in Verbindung stehen,
wobei der Wassereinlass (8) und der erste Wasserauslass (2) im ersten Pumpengehäuse (4) ausgebildet sind, und der zweite Wasserauslass (6) im zweiten Pumpengehäuse (9) ausgebildet ist,
der erste Entwässerungsmotor (1) an dem ersten Pumpengehäuse (4) angebracht ist und der zweite Entwässerungsmotor (10) an dem zweiten Pumpengehäuse (9) angebracht ist,
**dadurch gekennzeichnet, dass**
das erste Pumpengehäuse (4) und das zweite Pumpengehäuse (9) parallel angeordnet sind und das zweite Pumpengehäuse (9) und der Wassereinlass (8) auf derselben Seite des ersten Pumpengehäuses (4) angeordnet sind.

2. Doppelkopfentwässerungspumpe der Waschmaschine nach Anspruch 1, **dadurch gekennzeichnet, dass** ein dritter Wasserauslass, der mit dem Wassereinlass (8) in Verbindung steht, ebenfalls in dem ersten Pumpengehäuse (4) ausgebildet ist, und das zweite Pumpengehäuse (9) mit dem dritten Wasserauslass verbunden ist.

3. Doppelkopfentwässerungspumpe der Waschmaschine nach Anspruch 2, **dadurch gekennzeichnet, dass** das erste Pumpengehäuse (4) einen ersten Pumpengehäusekörper (401), ein Wassereinlassrohr (402), ein erstes Wasserauslassrohr (403) und ein drittes Wasserauslassrohr (404) umfasst,
wobei der erste Pumpengehäusekörper (401) innen mit einem Hohlkanal versehen ist, das Wassereinlassrohr (402), das erste Wasserauslassrohr (403) und das dritte Wasserauslassrohr (404) mit dem Hohlkanal des ersten Pumpengehäusekörpers (401) getrennt in Verbindung stehen
und der Wassereinlass (8), der erste Wasserauslass (2) und der dritte Wasserauslass entsprechend in den Endteilen des Wassereinlassrohrs (402), des ersten Wasserauslassrohrs (403) und des dritten Wasserauslassrohrs (404) ausgebildet sind.

4. Doppelkopfentwässerungspumpe der Waschmaschine nach Anspruch 3, **dadurch gekennzeichnet, dass** das Wassereinlassrohr (402), das erste Wasserauslassrohr (403) und das dritte Wasserauslassrohr (404) jeweils mit einer Seitenwand des ersten Pumpengehäusekörpers (401) in Verbindung stehen, das dritte Wasserauslassrohr (404) und das Wassereinlassrohr (402) in einer gleichen Ebene angeordnet sind, und das dritte Wasserauslassrohr (404) und das erste Wasserauslassrohr (403) in verschiedenen Ebenen angeordnet sind;
vorzugsweise das dritte Wasserauslassrohr (404) und das Wassereinlassrohr (402) auf derselben Seite des ersten Pumpengehäusekörpers (401) angeordnet sind;
und vorzugsweise der Wassereinlass (8) des Wassereinlassrohrs (402) so ausgebildet ist, dass er um 5-15 Grad nach oben geneigt ist.

5. Doppelkopfentwässerungspumpe der Waschmaschine nach Anspruch 2, **dadurch gekennzeichnet, dass** ein zweiter Pumpengehäusewassereinlass (901), der mit dem zweiten Wasserauslass (6) in Verbindung steht, in dem zweiten Pumpengehäuse (9) ausgebildet ist und der zweite Pumpengehäusewassereinlass (901) mit dem dritten Wasserauslass des ersten Pumpengehäuses (4) verbunden ist.

6. Doppelkopfentwässerungspumpe der Waschmaschine nach Anspruch 5, **dadurch gekennzeichnet, dass** der zweite Pumpengehäusewassereinlass (901) mit dem dritten Wasserauslass des ersten Pumpengehäuses (4) über einen Verbinder (15) in Verbindung steht,
und vorzugsweise der Verbinder (15) vorzugsweise eine weiche Wasserleitung ist.

7. Doppelkopfentwässerungspumpe der Waschmaschine nach einem der Ansprüche 1 bis 6, **dadurch gekennzeichnet, dass** das erste Pumpengehäuse (4) und das zweite Pumpengehäuse (9) in einem geteilten Modus angeordnet sind, und das zweite Pumpengehäuse (9) über einen Verbinder (15) mit dem ersten Pumpengehäuse (4) in Verbindung steht;
oder das erste Pumpengehäuse (4) und das zweite Pumpengehäuse (9) einstückig ausgebildet sind.

8. Doppelkopfentwässerungspumpe der Waschmaschine nach einem der Ansprüche 1 bis 7, **dadurch gekennzeichnet, dass** ein Entwässerungshub des zweiten Wasserauslasses (6) kleiner ist als ein Entwässerungshub des ersten Wasserauslasses (2);
und vorzugsweise eine erste Rückschlaganordnung (3) für die Einwegentwässerung am ersten Wasserablauf (2) angeordnet ist und eine zweite Rückschlaganordnung (7) für die Einwegentwässerung am zweiten Wasserablauf (6) angeordnet ist,
die zweite Rückschlaganordnung (7) einstückig aus einem weichen Material ausgebildet ist und einen Befestigungsteil (703) in Ringform und einen Rückschlagteil (701) in Scheibenform umfasst,
der Befestigungsteil (703) eine Rohrwand des zweiten Wasserauslasses (6) umhüllt und der Rückschlagteil (701) den zweiten Wasserauslass (6) abdeckt.

## Revendications

1. Pompe de drainage à double tête d'une machine à laver, comprenant un carter de pompe dans lequel
une entrée d'eau (8) est formée, et au moins une première sortie d'eau (2) et au moins une deuxième sortie d'eau (6) étant formées dans le carter de pompe,
un premier moteur de drainage (1) étant monté sur le carter de pompe correspondant à la première sortie d'eau (2) et un second moteur de drainage (10) étant monté sur le carter de pompe correspondant à la deuxième sortie d'eau (6),
le premier moteur de drainage (1) commandant l'ouverture/la fermeture de la première sortie d'eau (2) et le second moteur de drainage (10) commandant l'ouverture/la fermeture de la deuxième sortie d'eau (6),
le carter de pompe comprenant un premier carter de pompe (4) et un second carter de pompe (9) qui communiquent entre eux, l'entrée d'eau (8) et la première sortie d'eau (2) étant formées dans le premier carter de pompe (4), et la deuxième sortie d'eau (6) étant formée dans le second carter de pompe (9),
le premier moteur de drainage (1) étant monté sur le premier carter de pompe (4), et le second moteur de drainage (10) étant monté sur le second carter de pompe (9),
**caractérisée en ce que**
le premier carter de pompe (4) et le second carter de pompe (9) sont disposés en parallèle, et **en ce que** le second carter de pompe (9) et l'entrée d'eau (8) sont disposés d'un même côté du premier carter de pompe (4).

2. Pompe de drainage à double tête de machine à laver selon la revendication 1, **caractérisée en ce qu'**une troisième sortie d'eau communiquant avec l'entrée d'eau (8) est également formée dans le premier carter de pompe (4), et **en ce que** le second carter de pompe (9) est raccordé à la troisième sortie d'eau.

3. Pompe de drainage à double tête de machine à laver selon la revendication 2, **caractérisée en ce que** le premier carter de pompe (4) comprend un premier corps de carter de pompe (401), un tuyau d'entrée d'eau (402), un premier tuyau de sortie d'eau (403) et un troisième tuyau de sortie d'eau (404),
le premier corps de carter de pompe (401) étant intérieurement pourvu d'un canal creux, le tube d'entrée d'eau (402), le premier tuyau de sortie d'eau (403) et le troisième tuyau de sortie d'eau (404) communiquant avec le canal creux du premier corps de carter de pompe (401) séparément,
et l'entrée d'eau (8), la première sortie d'eau (2) et la troisième sortie d'eau étant formées de manière correspondante dans les parties d'extrémité du tuyau d'entrée d'eau (402), du premier tuyau de sortie d'eau (403) et de la troisième sortie d'eau tuyau (404).

4. Pompe de drainage à double tête de machine à laver selon la revendication 3, **caractérisée en ce que** le tuyau d'entrée d'eau (402), le premier tuyau de sortie d'eau (403) et le troisième tuyau de sortie d'eau (404) communiquent respectivement avec une paroi latérale du premier corps de carter de pompe (401), le troisième tuyau de sortie d'eau (404) et le tuyau d'entrée d'eau (402) étant disposés sur un même plan, et le troisième tuyau de sortie d'eau (404) et le premier tuyau de sortie d'eau (403) étant disposés sur des plans différents ;
**en ce que** le troisième tuyau de sortie d'eau (404) et le tuyau d'entrée d'eau (402) sont de préférence disposés sur un même côté du premier corps de carter de pompe (401) ;
et **en ce que** l'entrée d'eau (8) du tuyau d'entrée d'eau (402) est de préférence formée de manière à être inclinée vers le haut de 5 à 15 degrés.

5. Pompe de drainage à double tête de machine à laver selon la revendication 2, **caractérisée en ce qu'**une seconde entrée d'eau (901) du carter de pompe qui communique avec la deuxième sortie d'eau (6) est formée dans le second carter de pompe (9), et **en ce que** l'entrée d'eau du second carter de pompe (901) est en communication avec la troisième sortie d'eau du premier carter de pompe (4).

6. Pompe de drainage à double tête de machine à laver selon la revendication 5, **caractérisée en ce que** la seconde entrée d'eau (901) du carter de pompe communique avec la troisième sortie d'eau du premier carter de pompe (4) par l'intermédiaire d'un connecteur (15),
et **en ce que** le connecteur (15) est de préférence un tuyau d'eau douce.

7. Pompe de drainage à double tête de machine à laver selon l'une des revendications 1 à 6, **caractérisée en ce que** le premier carter de pompe (4) et le second carter de pompe (9) sont disposés en mode divisé, et **en ce que** le second carter de pompe (9) communique avec le premier carter de pompe (4) par l'intermédiaire d'un connecteur (15) ;
ou **en ce que** le premier carter de pompe (4) et le second carter de pompe (9) sont formés d'un seul tenant.

8. Pompe de drainage à double tête de machine à laver selon l'une des revendications 1 à 7, **caractérisée en ce qu'**un élévateur de drainage de la deuxième sortie d'eau (6) est plus petit qu'un élévateur de drainage de la première sortie d'eau (2) ;
et **en ce qu'**une première structure de contrôle (3) pour le drainage à sens unique est de préférence disposée sur la première sortie d'eau (2), et **en ce qu'**une seconde structure de contrôle (7) pour le drainage à sens unique est disposée sur la deuxième sortie d'eau (6),
la seconde structure de contrôle (7) étant formée d'un seul tenant par un matériau souple et comprenant une pièce de montage (703) de forme annulaire et une pièce de contrôle (701) en forme de disque,
la pièce de montage (703) recouvrant une paroi de tuyau de la deuxième sortie d'eau (6), et la pièce de contrôle (701) recouvrant la deuxième sortie d'eau (6).
